Europäisches Patentamt

European Patent Office

Office européen des brevets

(19)

(11) **EP 1 127 984 A1**

(12) **EUROPEAN PATENT APPLICATION**
published in accordance with Art. 158(3) EPC

(43) Date of publication:
29.08.2001 Bulletin 2001/35

(51) Int Cl.⁷: **E01F 9/00**

(21) Application number: **99940558.2**

(86) International application number:
**PCT/JP99/04677**

(22) Date of filing: **30.08.1999**

(87) International publication number:
**WO 01/16430 (08.03.2001 Gazette 2001/10)**

(84) Designated Contracting States:
**AT BE CH CY DE DK ES FI FR GB GR IE IT LI LU MC NL PT SE**

(71) Applicant: **Matsushita Shokai Co., LTD.**
**Higashiosaka-shi, Osaka-fu 577-0813 (JP)**

(72) Inventor: **MATSUSHITA, Yukio**
**Higashiosaki-shi Osaka-fu 577-0813 (JP)**

(74) Representative: **Olgemöller, Luitgard, Dr. et al**
**Leonhard - Olgemöller - Fricke,**
**Patentanwälte,**
**Postfach 10 09 57**
**80083 München (DE)**

(54) **PLANAR LIGHT EMITTING DEVICE AND LIGHT-EMITTING GUIDE**

(57) This invention provides a planar light-emitting device which comprises at least one substantially planar elongated light-emitting area, and at least one elongated incident light-reflecting area placed alongside the light-emitting area on substantially the same plane as that where the light-emitting area is on, wherein the light-emitting area has a function of emitting light along the longitudinal axis of said light-emitting area at an angle with an imaginary line perpendicular to said light-emitting area, and the incident light-reflecting area has a function of reflecting a light incident thereon along the longitudinal axis of said incident light-reflecting area at an angle with an imaginary line perpendicular to the incident light-reflecting area in the direction of the incidence.

The light-emitting guide of this invention includes the planar light-emitting device. When the guide is fixed onto, for example, the inner wall of a tunnel so that the respective axes of the light-emitting area and the incident light-reflecting area are placed horizontally, the guide can emit a light beam with a large luminous intensity toward vehicles running through the tunnel, and it can also retroreflect light beams from the headlights of the vehicles. Therefore the guide does not interfere with the traffic while it has an excellent visibility.

**Description**

Technical Field

This invention relates to a planar light-emitting device, particularly to a planar light-emitting device useful for a light-emitting guide that is placed at the side edge of a road or on the wall of a tunnel to show drivers the position thereof. This invention further relates to a light-emitting guide provided with the planar light-emitting device.

Prior Art

At the side edge of a road along which drivers cannot see ahead and inside a tunnel are often placed guides that show the drivers the position of the side edge and that of the tunnel wall. For such guides have commonly been used planar light-emitting guides that emit light from such a light source as light-emitting diodes.

Such conventional planar light-emitting guides emit light in the forward direction with almost even luminous intensity. Consequently the luminous intensity of the light seen from at an angle with the light-emitting face is not very high. In order to remove the disadvantage such planar light-emitting guides had to be placed at positions projecting out from the side edge of a road or the wall of a tunnel so as that the light-emitting face can be seen frontally from running automobiles.

Besides, when the conventional planar light-emitting guides are placed inside a tunnel, typically, electricity is sent to light sources, for example light-emitting diodes, to make them give forth light. If the electric wires are down and electricity cannot be fed to the light sources, the guides do not emit light, which leads to the deprivation of the guides' function.

An objective of the invention is to provide a planar light-emitting device that can be placed at the side edge of a road or on the wall of a tunnel and that does not lose its function when the electric wires are down, and a light-emitting guide that is provided with the planar light-emitting device and that can advantageously be used inside tunnels.

Disclosure of the Invention

This invention relates to (1) a planar light-emitting device which comprises at least one substantially planar elongated light-emitting area, and at least one elongated incident light-reflecting area placed alongside said light-emitting area on substantially the same plane as that where said light-emitting area is on, wherein said light-emitting area has a function of emitting light along the longitudinal axis of said light-emitting area at an angle with an imaginary line perpendicular to said light-emitting area, and said incident light-reflecting area has a function of reflecting a light incident thereon along the longitudinal axis of said incident light-reflecting area at an angle with an imaginary line perpendicular to said incident light-reflecting area in the direction of the incidence.

Preferred embodiments of said planar light-emitting device(1) include:

(2) a planar light-emitting device having two or more light-emitting areas that are placed side by side on substantially the same plane;
(3) a planar light-emitting device having two or more incident light-reflecting areas that are placed side by side on substantially the same plane;
(4) a planar light-emitting device having two or more light-emitting areas and incident light-reflecting areas respectively wherein said light-emitting areas and said incident light-reflecting areas are arranged alternately along the longitudinal axes thereof;
(5) a planar light-emitting device further comprising a planar light emitter which comprises a light transmissible plate, light sources placed along the end faces of said light transmissible plate and emitting light into the inside of said plate, a light-emitting face formed on one face of said plate, and an emitted light-reflecting face formed on the face opposite to said one face to make the light emitted into said inside outgo from said light-emitting face at a particular angle with an imaginary line perpendicular to said light-emitting face, wherein said light-emitting area recited in (1) transmits the light outgoing from said light-emitting face;
(6) a planar light-emitting device wherein said light-emitting area recited in (1) comprises a light transmissible window for transmitting the light outgoing from said light-emitting face of said planar light emitter recited in (5);
(7) a planar light-emitting device wherein said light-emitting area recited in (1) occupies at least one part of said light-emitting face recited in (5);
(8) a planar light-emitting device wherein said incident light-reflecting area recited in (1) comprises an incident light-reflecting face for reflecting said incident light, said incident-light reflecting face being comprised of an incident light-reflecting member having a shape of sheet or plate;
(9) a planar light-emitting device wherein said incident light-reflecting area recited in (1) comprises said light-reflecting member placed along said light-emitting area recited in (1); and
(10) a planar light-emitting device wherein said incident light-reflecting area recited in (1) comprises a plurality of said light-reflecting members placed along said light-emitting area.

This invention further includes a light-emitting guide comprising said planar light-emitting device recited in any one of (1)-(10) wherein the respective axes of the light-emitting area and incident light-reflecting area are placed generally horizontally.

Brief Description of Drawings

Figure 1 is a partially cutaway view that shows the internal structure of the planar light-emitting device of Example 1, which is one embodiment of the planar light-emitting device in accordance with the invention.

Figure 2 shows a cross-sectional view taken on line X-X of Figure 1 and a cross-sectional view taken on line Y-Y of the same figure.

Figure 3 is a perspective view of the backside of the incident light-reflecting member used in the planar light-emitting device of Figure 1.

Figure 4 is a plan view showing another example of the incident light-reflecting member that can be used in the device of Figure 1.

Figure 5 is an enlarged sectional view showing the outgoing route of a ray emitted into the inside of the light-transmissible plate with which the planar light emitter in the planar light-emitting device of Figure 1 is provided.

Figure 6 is an enlarged sectional view showing the principle of retroreflection of the ray inside the incident light-reflecting member shown in Figure 3.

Figure 7 is a schematic representation showing the planar light-emitting device of Figure 1 placed on the inner wall of a tunnel.

Figure 8 is a perspective view showing the planar light-emitting device of Example 2, which is another embodiment of the invention.

Figure 9 is a perspective view showing the planar light-emitting device of Example 3, which is a modified example of the device of Example 2.

Figure 10 is a plan view showing the planar light-emitting device of Example 4, which is still another embodiment of the invention.

The reference numerals denote the followings. 1: light transmissible plate, 1a: end face, 1b: light-emitting face, 1c: backside, 1d: triangular groove, 1e: inner wall, 2: light source, 3: planar light emitter, 4: housing, 4a: upper face, 4b: bottom face, 5: light transmissible window, 5A: light-emitting area, 6: incident light-reflecting member, 6a: incident light-reflecting face, 6b: triangular groove, 6c: inner wall, 6d: concavity, 6e: reflecting face, 6A: incident light-reflecting area, 7: light source-cover, 8: light transmissible plate, 8a: light-emitting face, 8b: triangular groove, 9: incident light-reflecting member, 10: light-emitting plate, 10a: end face, 11: light source.

Preferred Embodiments of the Invention

1. Example 1

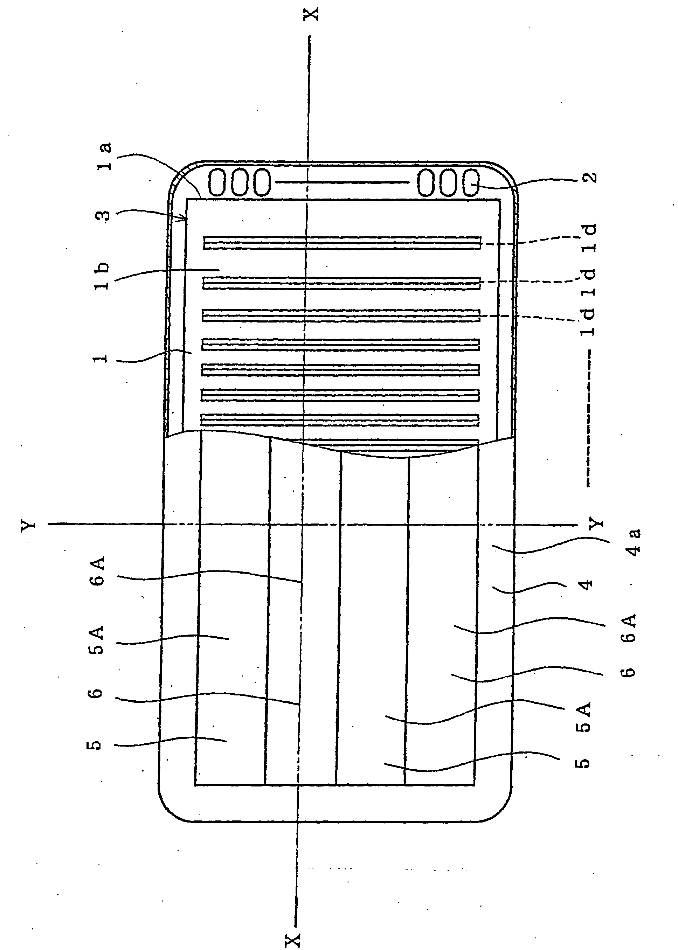

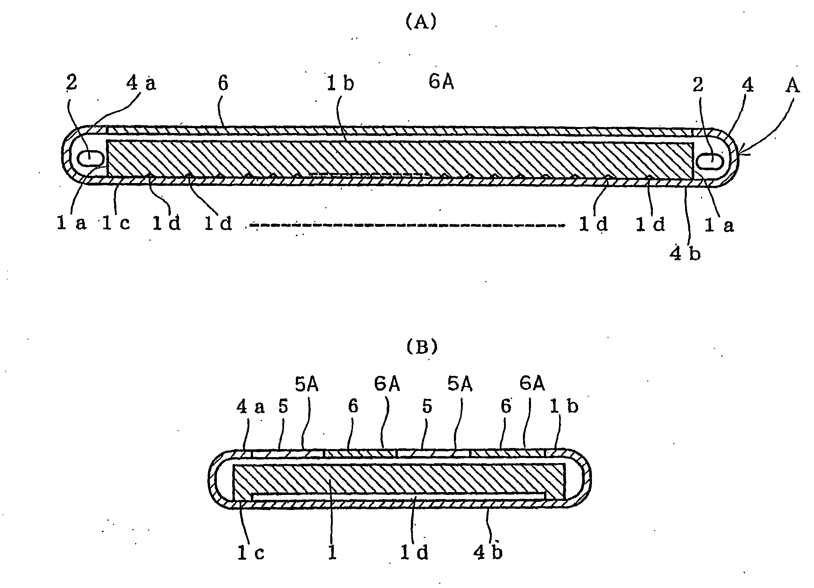

As shown in Figures 1 and 2, the planar light-emitting device of Example 1 comprises planar light emitter 3 comprising light transmissible plate 1, light sources 2 placed along end faces 1a of light transmissible plate 1 and light-emitting face 1b, which will be explained hereafter, formed on one face of light-transmissible plate 1, and housing 4 accommodating planar light emitter 3. In Figure 1, housing 4 is shown in a partially cutaway view where face 4a, and part of light transmissible window 5 and incident light-reflecting member 6 are cut away. In Figure 2, (A) shows a cross-sectional view taken on line X-X of Figure 1 and (B) a cross-sectional view taken on line Y-Y of the same figure.

For light transmissible plate 1 can be used a rectangular planar member having light transmissibility such as "a plate member having light transmissibility" taught by Unexamined Japanese Patent Application Publication No. 10-232633(1998).

Light transmissible plate 1 may be a colorless transparent one or colored transparent one.

Examples of the materials for light transmissible plate 1 are transparent synthesized resins such as acrylic resins, polycarbonates and polystyrenes, and other transparent materials such as various kinds of glass.

The thickness of light transmissible plate 1 is preferably from about 6 mm to about 10 mm. However, the thickness is not limited to this range.

As shown in Figures 1 and 2, light sources 2 are placed along a pair of end faces 1a, which form the shorter sides of light transmissible plate 1. In this example for light sources 2 are employed light-emitting diodes arranged in a line respectively along end faces 1a. With light sources 2 are connected a lighting circuit and a power source, which are not shown in the figures, to turn on light sources.

Other examples for light sources 2 are cold-cathode tubes, electroluminescent light sources, fluorescent lamps, mercury-arc lamps, neon tubes and incandescent lamps. Light sources 2 may be flickered by flickering means such as flickering circuits. When light sources that consume small electric power, such as light-emitting diodes, are used for light sources 2, since a solar battery can be used for the power source, the planar light-emitting device does not require external power sources, which leads to a substantial reduction in the device's size.

As shown in Figures 1 and 2, plural triangular grooves 1d, each having a triangular cross-section, are formed on the opposite face of light-emitting face 1b, i. e. backside 1c of light transmissible plate 1. These triangular grooves are arranged perpendicularly to the longitudinal sides, that is, along the transverse sides, of light transmissible plate 1 at regular spaces. The length of each of the triangular grooves 1d is substantially the same as the width, that is, the length of the side perpendicular to the longitudinal side of light transmissible plate 1. The triangular grooves 1d have a function to make the rays emitted by light sources 2 into light transmissible plate 1 outgo from light-emitting face 1b at an angle with an imaginary line perpendicular to light-emitting face 1b. In other words, the grooves have a function to make the light outgo at an angle of greater than 0° and less than 90° with light-emitting face 1b. This means that inner walls 1e of triangular grooves 1d correspond to the emitted light-reflecting face of the planar light emitter when the planar light-emitting device of the invention is provided with the planar light emitter.

When the number of triangular grooves 3 increases, which means the respective spaces between the grooves become smaller, the luminous intensity or the amount of the outgoing light becomes larger. On the other hand, the luminous intensity of the light emitted into light transmissible plate 1 becomes lower, as the light goes near to the center of the plate from end faces 1a. Therefore if, as shown in Figures 1 and 2, the respective vertical angles are formed so as that they have the same angle and the respective spaces between the grooves become smaller, or the number of the grooves increases, as the positions thereof on the emitted light-reflecting face come near to the center, both of the luminous intensities and the outgoing angles of the outgoing rays are substantially constant irrespective of the positions on emitted light-reflecting face 1b where the rays are made to outgo.

One of the methods to form triangular grooves 1d on light transmissible plate 1 is to irradiate a laser beam having a diameter of about 0.2 to 0.3 mm onto backside 1c perpendicularly thereto and to scan it on the backside along the transverse side of light transmissible plate 1. Other methods include the formation by machining work or injection molding.

Housing 4 accommodating planar light emitter 3 is not light transmissible, and as shown in Figures 1 and 2, has a shape of rectangular parallelopiped of which height is small compared with the length and width. Housing 4 accommodates planar light emitter 3 including light transmissible plate 1 and light sources 2, and a lighting circuit for lighting light sources 2. Light transmissible plate 1 is placed inside housing 4 along the longitudinal side thereof.

On that upper face 4a of housing 4, which faces light-emitting face 1b of light transmissible plate 1, is formed an opening. In upper face 4a so as to fill the opening are set alternately along the longitudinal side of housing 4 light transmissible window 5 and incident light-reflecting member 6. Light transmissible window 5 is an elongated rectangular plate member and through it the light from light-emitting face 1b outgoes. Incident light-reflecting member 6 is also an elongated rectangular plate member and on the backside of it is formed incident light-reflecting face 6a. The term "an elongated rectangular" means a rectangular of which length is greater than the width. In the planar light-emitting device of Example 1, light-emitting area 5A comprises the face of light transmissible window 5, and incident light-reflecting area 6A does the face of incident light-reflecting member 6. The length of light transmissible window 5 and that of incident light-reflecting member 6 are substantially the same as that of light transmissible plate 1. For the materials of light transmissible window 5 and incident light-reflecting member 6 may be used those that have been mentioned for the materials of light transmissible plate 1. Both the window and the member may be colorless transparent ones or colored transparent ones.

As shown in Figures 1 and 2, the planar light-emitting device of Example 1 has two light transmissible windows 5 and two incident light-reflecting members 6. However, as long as light transmissible windows 5 and incident light-reflecting members 6 are arranged alternately along the longitudinal side of the device, the respective numbers of the windows and members are not limited.

As shown in Figure 1, in the planar light-emitting device of Example 1, light transmissible windows 5 and incident light-reflecting members 6 are bonded together at their respective longitudinal sides so as to form a plate. This plate is set in upper face 4a of housing 4 to fill the opening.

Instead, for the planar light-emitting device of Example 1 a plate-like member having light transmissible windows 5 and incident light-reflecting members 6 may be formed from a transparent plate. For example, on the backside of the transparent plate at the parts corresponding to those where incident light-reflecting members 6 are placed may be formed incident light-reflecting faces 6a, which are made in stripes along the longitudinal side of the plate. The plate may be made of the transparent materials used for light transmissible plate 1. In this plate-like member, the parts, on the backsides of which are formed incident light-reflecting faces 6a, function as incident light-reflecting areas 6A. The other parts of the plate-like member function as light transmissible windows 5, which correspond to light-emitting areas 5A. Therefore the light outgoing from planar light emitter 3 goes through those parts of the plate-like member on which incident light-reflecting faces 6a are not formed.

Also, incident light-reflecting members 6 may be stuck to the surface of a colorless or colored transparent plate along the longitudinal sides thereof at equal spaces and the obtained plate may be set in upper face 4a of housing 4 to fill the opening. In this plate, the parts where incident light-reflecting members are not stuck function as light transmissible windows 5, or light-emitting areas 5A.

Further, at least upper face 4a of housing 4 may be made colorless or colored transparent, and incident light-reflecting members 6 may be stuck onto the face along the longitudinal sides thereof at equal spaces. The parts where incident light-reflecting members are not stuck function as light transmissible windows 5, or light-emitting areas 5A.

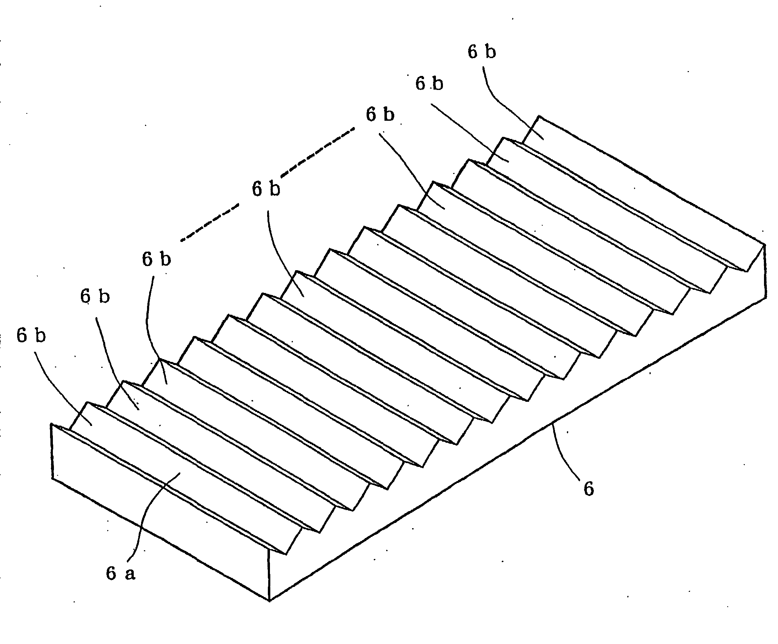

For incident light-reflecting member 6 used for the planar light-emitting device of Example 1 may be employed, for example, the member 6 shown in Figure 3. This member has on its backside, which is opposite to the face upon which incident light comes, plural triangular grooves 6b that are arranged side by side and parallel with the transverse sides of the member. Incident light-reflecting faces 6a are made of inner walls 6c of triangular grooves 6b.

When light comes upon incident light-reflecting members 6 at an incident angle of Ψ, the members reflect the light in the incident direction. Reflecting incident light in the incident direction may sometimes be called "retroreflection" hereafter. The incident angle Ψ can also be called the retroreflection angle.

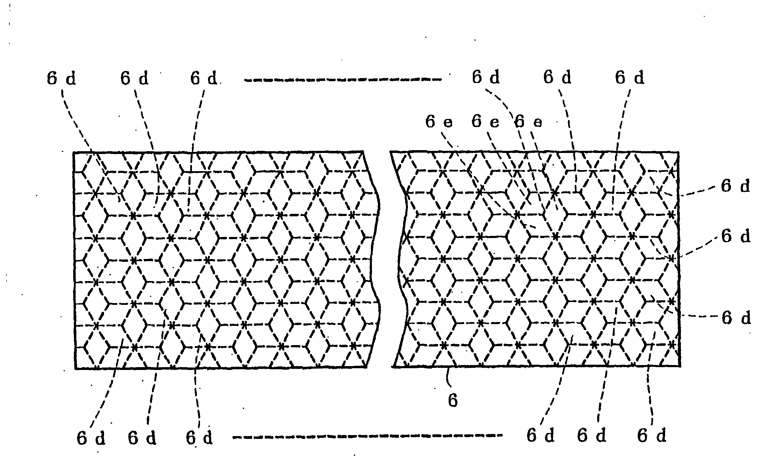

Another example of incident light-reflecting member 6 is the member shown in Figure 4. This member 6 has on its backside concavities 6d, each of which is made of three touching square-shaped or rhombus-shaped reflecting faces 6e. These concavities are arranged side by side so as to make a honeycomb. As shown in Figure 4, of three reflecting faces 6e, one is arranged to face the transverse side of incident light-reflecting member 6 and other two faces are respectively joined with the one face at an angle of 60°.

In this embodiment incident light-reflecting face 6a is made of the inner walls of concavities 6d. Similarly to the member 6 shown in Figure 3, this face reflects incident light coming thereupon at the retroreflection angle.

Still another example of incident light-reflecting member 6 is a transparent plate having on its backside, for example, a honeycomb arrangement of triangular pyramid-shaped or circular cone-shaped concavities.

Also, when incident light-reflecting member 6 is stuck onto a light transmissible plate-like member or a light transmissible upper face 4a of housing 4, may be employed a sheet-like incident light-reflecting member 6 having incident light-reflecting face 6a on its one face, instead of the plate-like member 6.

The planar light-emitting device of Example 1 is usually used for guiding devices that are placed along roads or inside tunnels. As will be explained hereafter, this device is fixed onto the inner wall of a tunnel so that light-emitting areas 5A and incident light-reflecting areas 6A are placed parallel to the inner wall and the axes of the respective areas are generally horizontal. In order that the device of Example 1 may emit light of a high luminous intensity toward drivers going through the tunnel, vertical angle θ of triangular groove 1d is decided so that the light emitted from light sources 2 into the inside of light transmissible plate 1 is made to outgo at an angle Φ of more than 0° to less than 90°, preferably more than 0° to not more than 30°, more preferably 5° to 20°, particularly preferably 10° to 20°.

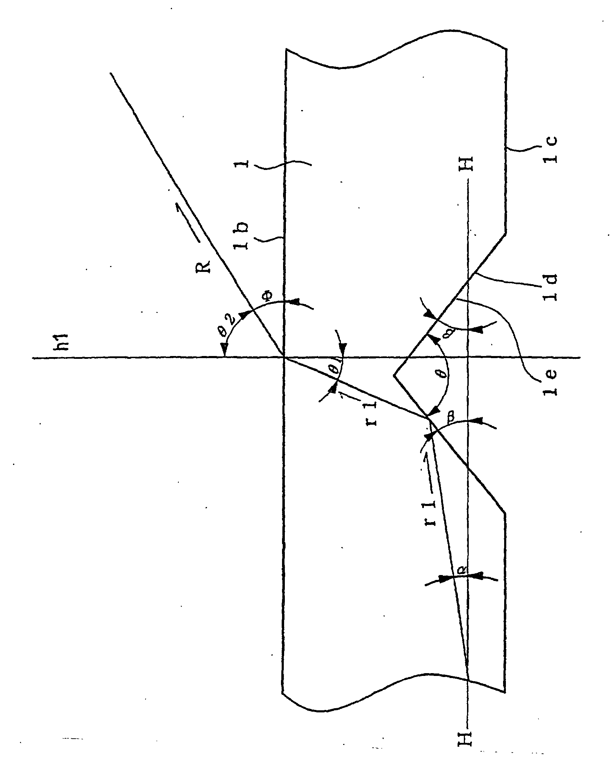

Figure 5 shows a passage of a ray emitted into the inside of light transmissible plate 1.

In Figure 5, r1 denotes a passage of a ray emitted from light source 2, α an angle made by passage r1 and imaginary plane H parallel with both light-emitting face 1b and backside 1c, and R a passage of the ray when it outgoes from light-emitting face 1b. When the refractive index of light transmissible plate 1 is n1, the refractive index of air is n2, the complementary angle of the outgoing angle Φ is θ2, and the angle made by the passage of the ray just after the reflection by inner wall 1e and imaginary line h1 perpendicular to light-emitting face 1b is θ1, these variables have the following relationship:

$$n1 \cdot \sin \theta 1 = n2 \cdot \sin \theta 2 = n2 \cdot \cos\Phi \qquad (1)$$

Angles α, θ and θ1 have the following relationship:

$$\theta - \theta 1 + \alpha = 90° \qquad (2)$$

From formulae (1) and (2), variables n1, n2, Φ, θ and α have the following relationship:

$$n1 \cdot \sin(\theta + \alpha - 90°) = n2 \cdot \cos\Phi \qquad (3)$$

When light transmissible plate 1 is made of an acrylic resin, since the acrylic resin typically has a refraction index of 1.49, n1 may be regarded as 1.49. The refraction index of air (n2) is 1.00. As mentioned above, since angle Φ is from more than 0° to less than 90°, when angle α is 0°, vertical angle θ is more than 90° to less than 132.1°, which is calculated from formula (3). When angle Φ is from more than 0° to less than 30°, vertical angle θ is from not less than 125.5° to less than 132.1°.

Angle α is considered to be usually in the range of -15° to +15°. Therefore, when angle Φ is from more than 0° to less than 30° and angle α is -15°, vertical angle θ is from not less than 110.5° to less than 117.1°, from formula (3). When angle α is +15°, vertical angle θ is from not less than 140.5° to less than 147.1°.

Through forming triangular grooves 1d so as that their respective vertical angles θ are within the above-mentioned ranges, the light outgoes from light-emitting face 1b at an angle Φ of the range. Since light-emitting area 5A comprises light transmissible window 5, the light goes out through light-emitting area 5A at the angle Φ.

On the other hand, vertical angle η of triangular grooves 6b on incident light-reflecting member 6 is decided in the following steps.

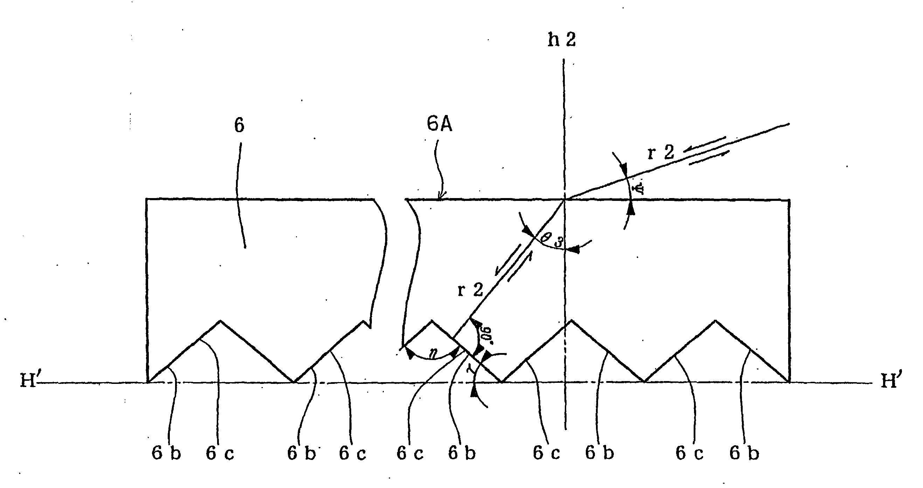

Figure 6 shows a passage of an incident ray inside incident light-reflecting member 6. In the figure, r2 denotes a passage of the incident ray. When the refractive index of incident light-reflecting member 6 is n3, the angle made by passage r2 and imaginary line h2 perpendicular to the upper face of incident light-reflecting member 6 is named θ3, and the angle made by inner wall 6c of triangular groove 6b and imaginary plane H' parallel with the upper face of incident light-reflecting member 6 is named $\gamma$, refractive index n3, angle θ3 and retroreflection angle Ψ have the following relationship:

$$n3 \cdot \sin\theta3 = n1 \cdot \sin(90° - \Psi) = n1 \cdot \cos\Psi \quad (4).$$

wherein n1 is 1 since n1 denotes the refractive index of air.

Since a ray incident upon incident light-reflecting area 6A goes through incident light-reflecting member 6 to inner wall 6c of triangular groove 6b and is retroreflected by inner wall 6c, the return passage of the retroreflected ray is the same as the incident passage, along which the ray has come to inner wall through incident light-reflecting member 6.

Therefore, since inner wall 6c must be perpendicular to passage r2, angle $\gamma$ is equal with angle θ3. Then, vertical angle η of triangular groove 6b is represented by the following formula:

$$\eta = (180° - 2\theta3)/2 \quad (5)$$

Retroreflection angle Ψ in Example 1 is, similar to outgoing angle Φ, from more than 0° to less than 90°, preferably from more than 0° to not more than 30°, more preferably from 5° to 20°, particularly preferably from 10° to 20°. This angle is typically around 16.5°.

When light transmissible plate 1 is made of an acrylic resin, since the acrylic resin typically has a refraction index of 1.49, n3 may be regarded as 1.49. When angle Ψ is from more than 0° to not more than 30°, angle θ3 or angle $\gamma$ is from not less than 35.5° to less than 42.2°, which is calculated from formulae (4) and (5). On the other hand, vertical angle η of triangular groove 6b is from more than 95.7° to not more than 108.9°. When retroreflection angle Ψ is 16.5°, angle θ3 is about 40° and therefore vertical angle η is about 100°.

The planar light-emitting device of Example 1 may be used as a guide showing the inner wall of a tunnel or the side edge of a road when it is fixed onto the inner wall or placed at the side edge.

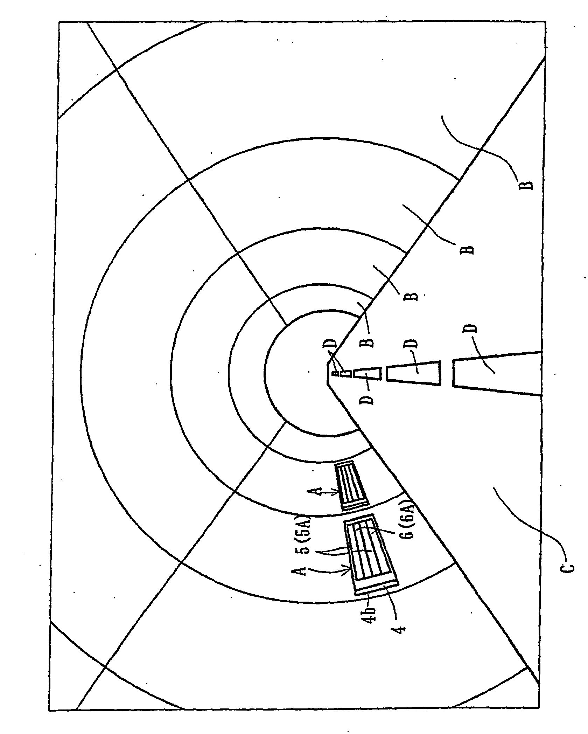

Referring to Figure 7, I will explain an embodiment in which the planar light-emitting device is used as a light-emitting guide inside a tunnel. In the figure, "A" denotes a planar light-emitting device in accordance of Example 1.

As shown in Figure 7, planar light-emitting device A is fixed to inner wall B of the tunnel through bottom face 4b of housing 4 and a fixing support, which is not shown, so that both light transmissible window 5 and incident light-reflecting member 6 of device A extend along road C, which is the road running through the tunnel, or generally horizontally and the transverse sides of housing 4 are vertical to road C. In this figure, D means the center line drawn on road C.

As understood, since device A substantially does not project from the surface of the inner wall, it seldom interferes in the traffic.

Further, since light-emitting areas 5A comprising light transmissible windows 5 extend horizontally, light beams having a high luminous intensity is emitted from the surfaces of areas 5A in the horizontal direction to automobiles and motorcycles running through the tunnel. Still further, since light-emitting areas 5A are seen long from side to side from the drivers, the emitted light beams can be seen well from far away.

Also, since incident light-reflecting areas 6A comprising incident light-reflecting members 6 extend horizontally, light beams from the automobiles and motorcycles are incident on incident light-reflecting areas 6A obliquely at a particular angle and retroreflected in the incident direction or toward the automobiles and motorcycles with a high luminous intensity. In addition, incident light-reflecting areas 6A are also seen long from side to side from the drivers, the retroreflected light can be seen well from far away.

Furthermore, when light sources 2 are turned off on account of broken wires, etc., the planar light-emitting device of Example 1 still functions as a guide showing the positions of the walls of the tunnel.

2. Example 2

The planar light-emitting device of this example shows an embodiment wherein the device has the planar light emitter and further includes a light-emitting area comprising a part of the light-emitting face and an incident light reflecting area comprising the incident light-reflecting member placed on the light-emitting face.

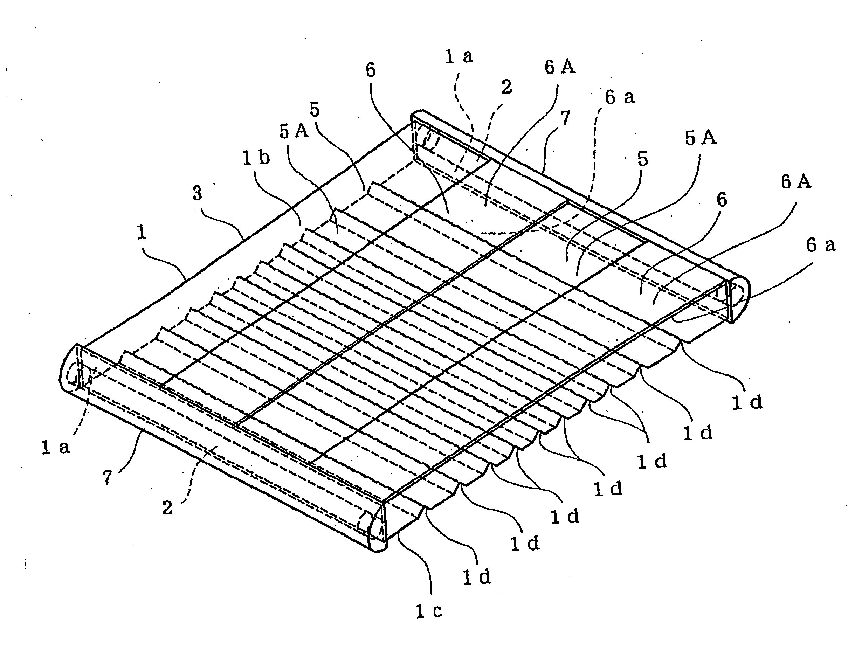

The device of Example 2, as shown in Figure 8, has a planar light emitter that is essentially the same as planar light emitter 3 of Example 1. In Figure 8, the reference numerals that are also used in Figures 1-7 denote respectively the same elements as the elements meant in the precedent figures, unless mentioned otherwise.

Light transmissible plate 1 of Example 2 is essentially the same as that of Example 1, except that triangular grooves Id are formed over the entire width of light transmissible plate 1. In the figure light sources 2 are cylindrical cold-cathode tubes extending along the respective end faces la of light transmissible plate 1. Other examples of light sources 2 are arrays of light-emitting diodes similar to those used in the embodiment of Example 1, electroluminescent light sources, fluorescent lamps, mercury-arc lamps, neon tubes and incandescent lamps. Similar to those of Example 1, light sources 2 are connected with flickering circuits and a power source, which are not shown. What is different from the embodiment of Figure 1 is that the sources other than the parts facing end faces 1a are covered with light-untransmissible light source-covers 7.

On light-emitting face 1b two planar rectangular incident light-reflecting members 6 are arranged parallel with each other along the longitudinal sides of plate 1. Two incident light-reflecting areas 6A are comprised of these two incident light-reflecting members 6.

On the other hand, two light-emitting areas 5A are comprised of those parts of light-emitting face 1b that are not covered with incident light-reflecting members 6.

Incident light-reflecting members 6 are so placed on light-emitting face 1b that incident light-reflecting areas 6A and light-emitting areas 5A are arranged alternately along the longitudinal sides of light transmissible plate 1.

For incident light-reflecting member 6 can be used, for example, the incident light-reflecting member shown in Figure 3 as well as that shown in Figure 4.

Since the angle at which the outgoing light goes out of light-emitting areas 5A, the retroreflection angle at which the light is reflected in incident light-reflecting areas 6A, the passage of rays emitted from light sources 2 into the inside of light transmissible plate 1, and the reflection passage along which the incident rays are reflected by incident light-reflecting member 6 in the planar light-emitting device of Example 2 are basically the same as those in the device of Example 1, the spaces between triangular grooves 1b and the vertical angles thereof and the vertical angles of triangular grooves 6b may be decided in the same way.

The planar light-emitting device of Example 2 may also be used as a light-emitting guide placed, for example, inside tunnels. As shown in Figure 7, the device can be fixed onto the inner wall of a tunnel so that the axes of light-emitting areas 5A and incident light-reflecting areas 6A are parallel with the road, or generally horizontally.

The device of this example can also emit light beams having a high luminous intensity to automobiles and motorcycles running through the tunnel. Further, light beams from the automobiles and motorcycles are retroreflected toward them.

Also, the device of Example 2 does not have housings, and therefore the thickness of the device can be reduced.

## 3. Example 3

This example shows a planar light-emitting device that has incident light-reflecting areas comprising disk-shaped incident light-reflecting members arranged in a double line, instead of those employed in Example 2.

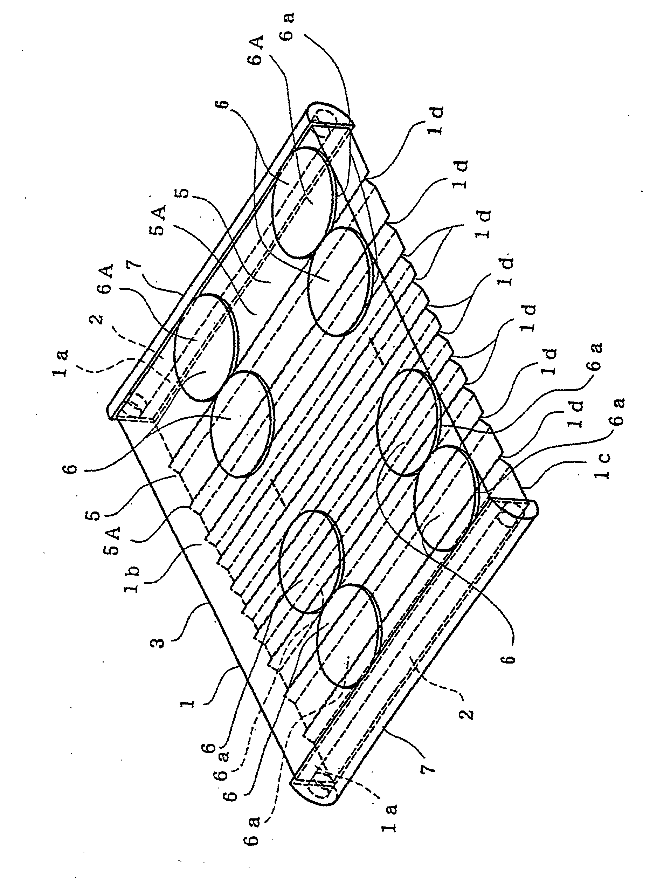

As shown in Figure 9, the planar light-emitting device of Example 3 has plural disk-shaped incident light-reflecting members 6 arranged on light-emitting face 1b in a double line along the longitudinal sides of light transmissible plate 1 with a space between the lines.

In this example, incident light-reflecting areas 6A comprise each line of members 6, and light-emitting areas 5A comprise parts between the lines.

The shape of the members 6 may be tetragons, polygons, etc. other than the circle shown in Figure 9.

In particular, a preferable incident light-reflecting member 6 of this example has optical grooves or concavities similar to that shown in Figure 3 or 4.

## 4. Example 4

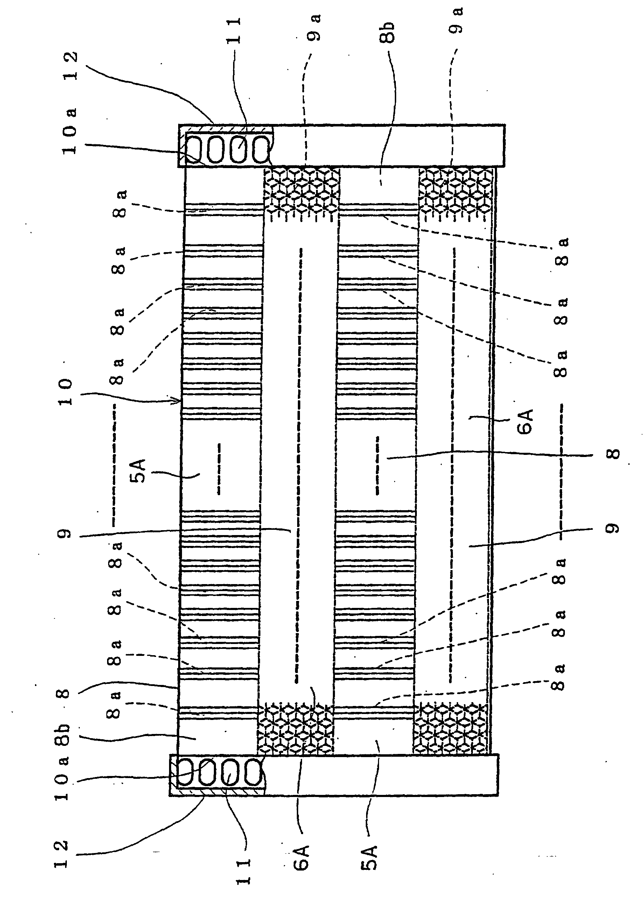

As shown in Figure 10, the planar light-emitting device of Example 4 have light transmissible plates 8 substantially the same as plate 1 of Example 1, and plate-like incident light-reflecting members 9 substantially the same as member 6 of Example 9. Two plates 8 and two members 9 are arranged alternately along the longitudinal sides thereof and bonded together to form a planar rectangular light-emitting plate 10. The transverse sides of plates 8 and those of members 9 make the transverse sides of plate 10.

Light transmissible plate 8 is the same as light transmissible plate 1 in Example 1 except triangular grooves 8a are formed over the entire width of plate 8.

Light sources 11 are arranged along a pair of end faces 10a, which make the transverse sides of light-emitting plate 10. An array of light-emitting diodes is employed for light source 11, which was also used for light source 2 in Example 1. Similarly to Example 2, light sources 11 other than the parts facing end faces 10a are covered with light source-covers 12.

Light transmissible plates 8 and incident light-reflecting members 9 may be bonded with an adhesive or by heat fusing. Alternatively, light-emitting plate 10 may be formed from a colorless or colored transparent plate.

In this example light-emitting areas 5A comprise light-emitting faces 8b of light transmissible plate 8 and incident light-reflecting areas 6A comprises the surfaces of incident light-reflecting members 9.

Light rays emitted by light sources 11 into the inside of light-emitting plate 10 are reflected by triangular grooves 8a formed on the backside of light transmissible plate 8, and made to outgo from light-emitting faces 8b formed on the front face of light transmissible plate 8, or light-emitting areas 5A, at angle Φ along the longitudinal sides of light transmissible plate 8, or light-emitting plate 10.

On the other hand, rays incident on incident light-reflecting areas 6A at an angle Ψ along the longitudinal sides of light-emitting plate 10 are retroreflected by incident light-reflecting members 9.

This device can also be used as a light-emitting guide in tunnels. As shown in Figure 7, the device can be fixed onto the inner wall of a tunnel so that both light-emitting areas 5A and incident light-reflecting areas 6A are parallel with the inner wall and the device is horizontally placed.

The planar light-emitting device of Example 4 is advantageous because it has another feature in addition to the features of the device in Example 2; it can be made thinner.

Industrial Applicability

The planar light-emitting device in accordance with this invention has a light-emitting area and an incident light-reflecting area that is placed side by side on substantially the same plane. Each of the areas makes light outgo or retroreflects incident light at an angle with an imaginary line perpendicular to the plane and along the longitudinal sides of the areas.

Due to these features, when the device is placed at the side edge of a road or on the inner wall of a tunnel so that the axes of the areas are parallel with the road, a light beam is emitted from the light-emitting area to automobiles or motorcycles running along the road and light beams from their headlights are incident on the incident light-reflecting area to be retroreflected.

The planar light-emitting device of this invention seldom interferes with the traffic when it is placed on roads or inside tunnels.

Further, when the device is used as a light-emitting guide placed on roads or inside tunnels and when the light-emitting area does not function on account of broken wires, since light beams from headlights of automobiles and motorcycles are retroreflected by the incident light-reflecting area, the device will not lose its function as a light-emitting guide.

**Claims**

1. A planar light-emitting device which comprises at least one substantially planar elongated light-emitting area, and at least one elongated incident light-reflecting area placed alongside said light-emitting area on substantially the same plane as a plane where said light-emitting area is on,

    wherein said light-emitting area has a function of emitting light along the longitudinal axis of said light-emitting area at an angle with an imaginary line perpendicular to said light-emitting area, and said incident light-reflecting area has a function of reflecting a light incident thereon along the longitudinal axis of said incident light-reflecting area at an angle with an imaginary line perpendicular to said incident light-reflecting area in the direction of the incidence.

2. A planar light-emitting device according to claim 1 wherein said device comprises two or more light-emitting areas that are placed side by side on substantially the same plane.

3. A planar light-emitting device according to claim 1 or 2 wherein said device comprises two or more incident light-reflecting areas that are placed side by side on substantially the same plane.

4. A planar light-emitting device according to any one of claims 1-3 wherein said device comprises two or more light-emitting areas and incident light-reflecting areas respectively, and said light-emitting areas and said incident light-reflecting areas are arranged alternately along the longitudinal axes thereof.

5. A planar light-emitting device according to any one of claims 1-4, further comprising a planar light emitter which comprises a light transmissible plate, light sources placed along the end faces of said light transmissible plate and emitting light into the inside of said plate, a light-emitting face formed on one face of said plate, and an emitted light-reflecting face formed on the face opposite to said one face to make said light outgo from said light-emitting face at an angle with an imaginary line perpendicular to said light-emitting face, wherein said light-emitting area transmits the light outgoing from said light-emitting face.

6. A planar light-emitting device according to claim 5 wherein said light-emitting area comprises a light transmissible window for transmitting the light outgoing from said light-emitting face.

7. A planar light - emitting device according to claim 5 wherein said light-emitting area occupies at least one part of said light-emitting face.

8. A planar light-emitting device according to any one of claims 1-7 wherein said incident light-reflecting area comprises an incident light-reflecting face for reflecting said incident light, and said incident light-reflecting face comprises an incident light-reflecting member having a shape of sheet or plate.

9. Aplanar light-emitting device according to claim 8 wherein said incident light-reflecting area comprises said light-reflecting member placed along said light-emitting area.

10. Aplanar light-emitting device according to claim 9 wherein said incident light-reflecting area comprises a plurality of said light-reflecting members placed along said light-emitting area.

11. A light-emitting guide comprising said planar light-emitting device according to any one claims 1-10 wherein the respective axes of said light-emitting area and said incident light-reflecting area are placed generally horizontally.

(A)

2   4 a   6   1 b   6A   2   4   A

1 a   1 c   1 d   1 d   1 d   1 d   1 a

4 b

(B)

5A   6A   5A   6A

4 a   5   6   5   6   1 b

1 c   1   1 d   4 b

EP 1 127 984 A1

EP 1 127 984 A1

EP 1 127 984 A1

EP 1 127 984 A1

EP 1 127 984 A1

**INTERNATIONAL SEARCH REPORT**

| International application No. |
|---|
| PCT/JP99/04677 |

**A. CLASSIFICATION OF SUBJECT MATTER**
    Int.Cl$^6$    E01F9/00

According to International Patent Classification (IPC) or to both national classification and IPC

**B. FIELDS SEARCHED**

Minimum documentation searched (classification system followed by classification symbols)
    Int.Cl$^6$    E01F9/00

Documentation searched other than minimum documentation to the extent that such documents are included in the fields searched
    Jitsuyo Shinan Koho          1922-1996    Toroku Jitsuyo Shinan Koho  1994-1999
    Kokai Jitsuyo Shinan Koho  1971-1999      Jitsuyo Shinan Toroku Koho  1996-1999

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| A | JP, 11-43908, A (KOITO MANUFACTURING CO., LTD.), 16 February, 1999 (16.02.99), Full text; all drawings   (Family: none) | 1-11 |

☐ Further documents are listed in the continuation of Box C.  ☐ See patent family annex.

| * Special categories of cited documents: | "T" later document published after the international filing date or priority date and not in conflict with the application but cited to understand the principle or theory underlying the invention |
|---|---|
| "A" document defining the general state of the art which is not considered to be of particular relevance | |
| "E" earlier document but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| 17 November, 1999 (17.11.99) | 30 November, 1999 (30.11.99) |

| Name and mailing address of the ISA/ | Authorized officer |
|---|---|
| Japanese Patent Office | |
| Facsimile No. | Telephone No. |

Form PCT/ISA/210 (second sheet) (July 1992)